# EUROPEAN PATENT SPECIFICATION

(11) **EP 3 130 895 B1**
(45) Date of publication and mention of the grant of the patent: **25.12.2019**
(21) Application number: 15180720.3
(22) Date of filing: 12.08.2015
(51) Int. Cl.: G01F 1/36, G01F 1/684, G01F 5/00, G01F 15/00

(54) **FLOW SENSOR DEVICE AND METHOD RELATED THERETO**
DURCHFLUSSSENSORVORRICHTUNG UND ENTSPRECHENDES VERFAHREN
DISPOSITIF DE CAPTEUR DE DÉBIT ET PROCÉDÉ ASSOCIÉ

(43) Date of publication of application: 15.02.2017
(73) Proprietor: Sensirion AG, 8712 Stäfa (CH)
(72) Inventor: HORNUNG, Mark, 8712 Stäfa (CH)
(74) Representative: Strässle, Simon

(56) References cited:
- EP-A1- 1 411 355
- US-A- 4 870 859
- US-A1- 2005 189 018
- US-A1- 2009 000 396
- US-A1- 2010 080 262
- US-A1- 2013 092 256

## Description

### TECHNICAL FIELD

The present invention relates to a flow sensor device for determining a fluid flow and to a method of operating such a device.

### PRIOR ART

Saving energy by making energy consumers more efficient is advantageous, particularly if energy is available only in limited amounts, *e.g.* in battery operated devices. This also applies to flow sensor devices measuring mass, volume, or standard volume flows of a fluid whilst being supplied by a battery.

US 6,550,324 B1 teaches a flow measurement method and a flow sensor device with increased energy efficiency. As flow sensor, a thermal flow sensor with a heating element is used. In order to save energy, the heating element is operated at different power levels.

EP 1,411,355 A1 teaches a flow measurement method and a flow sensor device for quick and accurate mass flow measurement of unknown substances. A temperature difference sensor and a pressure difference sensor are used according to a switch.

### SUMMARY OF THE INVENTION

It is an object of the present invention to provide a flow measurement method and a flow sensor device, respectively, having high energy efficiency.

This object is achieved by a method for measuring a fluid flow of a fluid g, the method comprising the steps of:
i) guiding the fluid g through a flow sensor device, the flow sensor device comprising a first flow sensor arrangement for intermittently measuring a flow rate *R* of said fluid g;
ii) monitoring said fluid flow by means of a second sensor comprised by the flow sensor device, the second sensor being designed to use less energy for its measurement than the first flow sensor arrangement uses for its measurement, the second sensor being configured and arranged to measure - preferably periodically or according to a predefined scheme defined by the user or the manufacturer of the device - a parameter *P* indicative of said flow rate *R* or of a change in said flow rate *R* or of a change in the flow measurement signal representing the flow rate *R* and being measured by the first flow sensor arrangement, and the second flow sensor being configured to generate at least one second measurement signal *S* representative of said parameter *P*;
iii) upon receiving said at least one second measurement signal *S* by means of a control unit comprised by the flow sensor device: comparing by means of said control unit said at least one second measurement signal *S* with a predefined threshold value T and generating a control signal *C* by means of a control unit if said comparison gives a predefined result;
iv) triggering with said control signal *C* a measurement of the flow rate *R* by means of said first flow sensor arrangement.

The result of the comparison may be that the threshold value T is exceeded, *i.e.* that an amount of the change of the flow rate or of the flow measurement signal representing the flow rate *R* and being measured by the first flow sensor arrangement is considerable such that an accurate flow measurement with the first flow sensor arrangement shall be done.

It is to be understood that the first flow sensor arrangement may additionally be triggered, *e.g.* by said control unit, to measure in addition independently of the second sensor. Accordingly, in some embodiments of the present invention, the flow sensor device is used, or arranged and configured, to measure a fluid flow by means of the first senor arrangement according to a predefined measurement scheme and, additionally, in dependence of said control signal *C.* Accordingly, this second sensor based measurement scheme may be implemented into a standard measurement. For example, the first flow sensor arrangement may measure every 5 seconds or 10 seconds or in dependence of trigger signals other than signal *C*, irrespective of whether it receives a trigger signal *C* based on second sensor measurements is available, while it additionally measures with the first flow sensor arrangement in the event of the trigger signal *C.*

The present invention is based on the insight that energy may be saved if one does not permanently use the first flow sensor arrangement to measure the rate but monitors the target parameter, *i.e.* the flow rate, by means of an energy efficient second sensor, *e.g.* an absolute pressure sensor, that may not necessarily be able to accurately determine the flow rate itself, at least not in the entire flow range covered by the flow sensor device, but is arranged and configured to reliably detect a change in the flow rate or in the flow measurement signal representing the flow rate *R* and being measured by the first flow sensor arrangement via said appropriate parameter *P.* At the same time, the second sensor consumes less energy for a single measurement than the first flow sensor arrangement does. The first flow sensor arrangement shall be triggered to measure the flow rate *R* upon detection of a predetermined change in the flow rate or in the flow measurement signal representing the flow rate *R* and being measured by the first flow sensor arrangement. Accordingly, the energy intensive first flow sensor arrangement is used intermittently at specific and interesting point in times when the flow rate or the flow measurement signal representing the flow rate *R* and being measured by the first flow sensor arrangement actually changes in a predetermined manner.

In the context of the present invention, the term *"change in the flow rate or in the flow rate or in the flow measurement signal representing the flow rate R and being measured by the first flow sensor arrangement"* refers to a change in the flow rate *R*, *e.g.* in the main flow *R* or in the bypass flow through the bypass channel or a change in the flow measurement signal representing the flow rate *R* and being measured by the first flow sensor arrangement, *e.g.* if the fluid temperature and/or composition changes. Said flow rate change may range from 0.1% to 10% or more of the initial flow rate.

The lower bound of said change for generating control signal *C* may actually be determined by the resolution of the second sensor, which may be worse than the resolution of the first flow sensor arrangement. Said lower bound may also be determined by the user or the manufacturer, in particular in case where a lower bound above resolution limit of the second sensor is desired for triggering the first flow sensor arrangement to measure the flow.

It is known that, *e.g*., conventional absolute pressure sensors may have a resolution of 1 pascal. Accordingly, said change may as small that is causes a pressure change at the position of the absolute pressure sensor of 1 pascal.

In the context of the present invention, the term "*parameter P indicative of said flow rate R or of a change in said flow rate R or in the flow measurement signal representing the flow rate R and being measured by the first flow sensor arrangement"* refers to a parameter that changes if the flow measurement signal measured by the first flow sensor arrangement changes, *e.g.* due to a change of the flow rate, of the fluid temperature, of the fluid composition, or of any other parameter that changes the measurement of the first flow sensor arrangement. Said parameter may therefore be a local absolute pressure or pressure difference between at least two positions. It may also be a flow velocity, fluid temperature, fluid composition or others.

In the context of the present invention, the term *"monitoring"* is to be understood as obtaining periodically, preferably regularly, the second measurement signal *S* and evaluating it whether a minimum flow measurement signal change is indicated by said signal *S* or by a plurality of consecutive second measurement signals *S.* Preferred monitoring intervals range from 1 millisecond to 100 seconds or more. Therefore, it is also possible to detect flow oscillations in the corresponding frequency range of 1 millisecond to 100 seconds.

In the context of the present invention, the term "*fluid flow*" is to be understood as a mass, volume, or standard volume flow of said fluid g, depending on the actual application.

In the context of the present invention, the term "*first flow sensor arrangement*" refers to a flow sensor arrangement that provides a flow sensor signal that represents the total flow rate *R*, *i.e.* the time-integrated flow sensor signal is a measure of the total flow rate *R.* In preferred embodiments, the total flow rate *R* is determined by integrating signal of the first flow sensor arrangement over time such as to generate the flow measurement signal. In other embodiments, the second measurement signal may be determined on the basis of the time integrated signal of the first flow sensor arrangement and the second measurement signal obtained by the second sensor.

In the context of the present invention, the term *"thermal flow sensor"* refers to a flow sensor that uses a sensing principle involving heating a part of the fluid g that streams in the flow having the target flow rate *R* and evaluating the temperature distribution in the flow by means of at least one temperature sensor.

In the context of the present invention, the term *"differential pressure flow sensor"* refers to a flow sensor arrangement that is arranged and configured to measure a flow rate by means of measuring a pressure difference between two or more predefined positions. The differential pressure measurement may be done by means of a differential pressure sensor and/or by means of two or more absolute pressure sensors. From the pressure difference between the two or more predefined positions, the total flow rate *R* may be determined.

In some embodiments, the method comprises the further step of generating by said first flow sensor arrangement, after said triggering, a flow measurement signal representative of said flow rate *R*, wherein said flow measurement signal may be outputted, for example, to the user or to further devices.

In some embodiments, the method comprises the step of using as the first flow sensor arrangement a thermal flow sensor or a differential pressure sensor arrangement. Thermal flow sensors are highly accurate but require a considerable amount of energy. The differential pressure sensor arrangement may use less energy but are only accurate if the flow rate exceeds a minimum. Accordingly, differential pressure sensors are advantageous when measuring in high-flow ranges. The differential pressure sensor may comprise two or more absolute pressure sensors.

In some embodiments, the method comprises the further step of using as the second sensor an absolute pressure sensor. State of the art absolute pressure sensors, such as Sensirions®'s SPT-BX, are highly energy efficient (using only a few microwatts) whilst measuring with high accuracy (resolution: 1 pascal).

In some embodiments, the method may comprise the step of using as the second sensor one or more absolute pressure sensors, the latter being comprised by the differential pressure sensor. Accordingly, the first flow sensor arrangement may be a differential pressure sensor arrangement with two or more absolute pressure sensors for accurately measuring the fluid flow rate *R*. At the same time, one (or more) of the absolute pressure sensors is also used as the second sensor. Accordingly, the second sensor may be part of the first sensor arrangement. Thereby, a minimum of hardware is required.

The computer program product according to invention may be implemented in a conventional flow sensor device with a differential pressure sensor including tow absolute pressure sensors, whereby the advantageous function according to invention is available, thereby changing the conventional device to a device according to invention.

In some embodiments, the method comprises the further step of receiving with said control unit said flow measurement signal measured by said first flow sensor arrangement and performing a signal redundancy check of said flow measurement signal with said second measurement signal *S* and/or a correction of an offset drift of the second sensor, *i.e.* a drift of the sensor signal at zero fluid flow.

These redundancy checks comprise comparing second measurement signal *S* and the flow measurement signal. Calibration measurements, calculations, or empirical values may be used for assessment of signal quality in the redundancy check. Such tests are particularly advantageous in high flow regimes where the second sensor may determine the fluid flow more accurately.

The correction of the offset drift may be necessary or advantageous if the second sensor is subject to such a drift, as it is the case, *e.g.,* for many pressure sensors. Accordingly, a zero flow measurement configuration may be realized and confirmed with the first flow sensor arrangement, whereupon the second sensor is evaluated and a possible second sensor signal offset is corrected electronically.

In a further aspect, the present invention relates to a flow sensor device comprising a first flow sensor arrangement for intermittently measuring a flow rate *R* of a fluid g through the flow sensor device;
wherein the flow sensor device comprises a second sensor, the second sensor being configured and arranged to measure - preferably periodically or according to a predefined scheme defined by the user or the manufacturer of the device - a parameter *P* indicative of said flow rate *R* or of a change in said flow rate *R* or of a change in the flow measurement signal representing the flow rate *R* and being measured by the first flow sensor arrangement, the second sensor being configured to generate at least one second measurement signal *S* to generate at least one second measurement signal *S* representative of said parameter *P*;
wherein said flow sensor device further comprises a control unit configured and arranged to receive said at least one second measurement signal *S* from said second flow sensor, wherein the control unit is configured and arranged to compare by means of said control unit said at least one second measurement signal *S* with a predefined threshold value T and to generate a control signal *C* by means of said control unit if said comparison gives a predefined result, wherein the control unit is further configured and arranged to trigger with said control signal *C* a measurement of the flow rate *R* with said first flow sensor arrangement;
wherein the second sensor is designed such that it uses less energy for the measurement than the first flow sensor arrangement uses for the measurement.

The result of the comparison may be that the threshold value T is exceeded as discussed above.

In some embodiments, the first flow sensor arrangement is or includes a thermal flow sensor, comprising at least one heater element and at least one, preferably two temperature sensors. As thermal flow sensors are highly accurate, in particular at low flow ranges, and use a considerable amount of energy, they work particularly well as first flow sensor arrangement or as parts thereof.

In some embodiments, the first flow sensor arrangement is or includes a differential pressure flow sensor arrangement. These sensor arrangements may preferably be used for high-flow regimes where differential pressure sensors allow accurate flow measurements.

In some embodiments, the second sensor is or includes an ultrasonic flow sensor, an optical flow sensor, or an electromagnetic flow sensor, or another known sensor capable of measuring parameter P while having lower energy consumption than the first flow sensor arrangement.

In a preferred embodiment, the second sensor is an absolute pressure sensor as discussed above.

In some embodiments, said differential pressure sensor comprises two or more absolute pressure sensors and wherein said second sensor is one of said two or more absolute pressure sensors as discussed above.

In some embodiments, said control unit is configured an arranged to receive a flow measurement signal measured by said first flow sensor arrangement and wherein the control unit is arranged and configured to perform a signal redundancy check of said flow measurement signal with said second measurement signal *S* as discussed above and/or a correction of an offset drift of the second sensor as outlined above.

In preferred embodiment, the flow sensor device is a gas meter, preferably a natural gas meter.

In some embodiments, the flow sensor device is a battery-operated device. For such devices minimal energy consumption by the sensing parts of the device is particularly crucial. Applications of the flow sensor devices according to invention may be battery-operated natural gas meters or medical devices like spirometers or inhalers. Often the maximum pressure drop at maximum flow is limited in these applications; therefore highly sensitive first flow sensor arrangements such as thermal flow sensors are used for volume flow measurements.

Another aspect of the invention relates to the use of the method according to invention, or of a flow sensor device according to invention, or of a computer program product according to invention, for measuring a flow rate *R* of a fluid g.

In a further aspect, the present invention relates to a computer program product comprising computer program code, wherein the program code, when carried out in an integrated circuitry, causes the integrated circuitry:
- to monitor a flow rate *R* of a fluid g through a flow sensor device according to invention;
- to compare said at least one second measurement signal *S* with a predefined threshold value T;
- to generate said control signal *C* by means of the control unit if a change in said flow rate *R* or in the flow measurement signal representing the flow rate *R* and being measured by the first flow sensor arrangement is sensed by the second sensor exceeds a predefined threshold value T; and
- to trigger with said control signal *C* a measurement of the flow rate *R* with said first flow sensor arrangement.

The computer program may be provided in a source code, in a machine-executable code, or in any intermediate form of code-like object code. It can be provided as a computer program product on a computer-readable medium in tangible form, *e.g.* on a CD-ROM or on a Flash ROM memory element, or it can be made available in the form of a network-accessible medium for download from one or more remote servers through a network.

It is to be understood that these aspects will be better understood when considered with the description of the preferred embodiments below. Aspects may be combined with one another without departing from the scope of the appended claims and further embodiments may be formed with parts or all the features of the embodiments as described herein.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows a first embodiment of a flow sensor device according to invention;
- Fig. 2: shows a second embodiment of a flow sensor device according to invention;
- Fig. 3: shows details of a third embodiment of a flow sensor device according to invention;
- Fig. 4: shows details of a fourth embodiment of a flow sensor device according to invention;
- Fig. 5: shows a fifth and sixth embodiment of a flow sensor device according to invention;
- Fig. 6: shows a seventh embodiment of a flow sensor device according to invention;
- Fig. 7: shows a simplified block diagram of a computer program product for the electronic device according to the present invention; and
- Fig. 8: shows a block diagram of a method of measuring a fluid flow rate according to invention.

### DESCRIPTION OF PREFERRED EMBODIMENTS

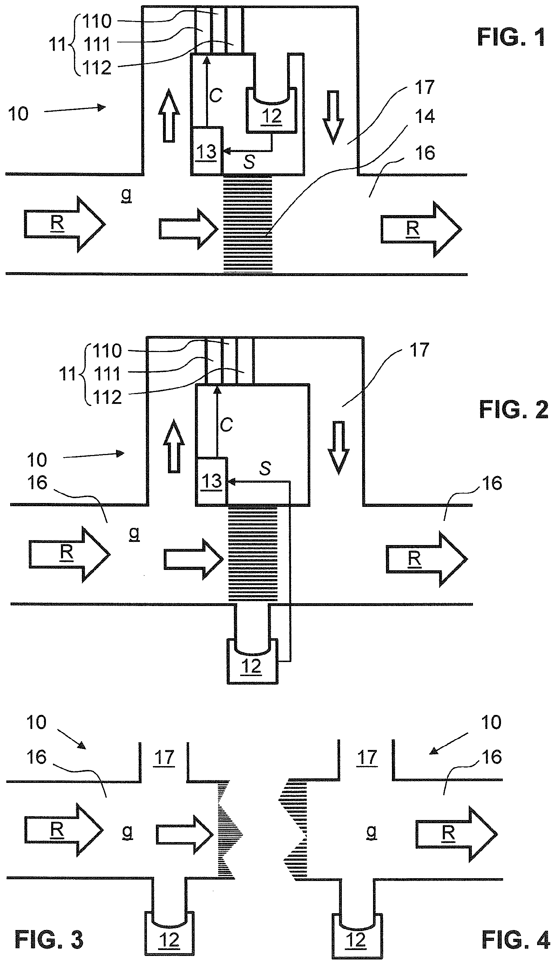

Preferred embodiments of the present invention are described with reference to Figures 1 to 8.

**Figure 1** shows a first embodiment of a flow sensor device 10 according to the present invention. The flow sensor device 10 comprises a main tube 16 for receiving and guiding a fluid flow *g* in total flow rate *R* from an inlet to an outlet. Moreover, a bypass 17 branches off the main tube 16 at an upstream position and rejoins the main tube 16 at a downstream position. The bypass channel 16 is arranged and configured to guide a part of the total flow rate *R* away from and back into the main tube 16 (indicated by arrows in Fig. 1).

In the main tube 16 is installed a laminar flow restrictor 14.

In the bypass channel 17 is arranged a first flow sensor arrangement 11 for accurately determining said fluid flow through the bypass channel 17. From the predetermined geometrical relation between the main tube 16 and the bypass channel 17, the total flow rate *R* may be determined from the bypass flow rate.

The first flow sensor arrangement 11 is a thermal flow sensor that comprises two temperature sensors 111, 112 at first upstream and second downstream positions, respectively, and a heater element 110 disposed therebetween. The thermal flow sensor 11 uses the conventional sensing principle of measuring a temperature difference between the first and second positions whilst locally heating the flowing fluid g with its heating element 110. The temperature difference is then a parameter indicative of the bypass flow rate and therefore allows determination of the total fluid rate *R* through the flow meter device 10.

It is to be understood that in further embodiments, the first flow sensor arrangement 11 may be of a different design (only one temperature sensor whilst measuring the heating current) or even using a different sensing principle allowing for determination of the flow rate *R* at a desired level of accuracy.

According to the first embodiment shown in Fig. 1, a second sensor 12 is arranged in the bypass channel 17. In Fig. 1, the second sensor 12 is arranged downstream of the thermal flow sensor 11. In other embodiments (not shown) the second sensor 12 may be arranged at another position in the bypass channel 17. The second sensor 12 determines a measurement parameter *P* indicative of a change in the fluid rate through the flow channel 17 or in the fluid rate *R* or in the flow measurement signal representing the flow rate *R* and being measured by the first flow sensor arrangement 11.

The second sensor 12 may be an absolute or a differential pressure sensor. The pressure sensor 12 is energetically more efficient than the thermal flow sensor 11 as the former does not involve any heating of the fluid g. The absolute pressure sensor 12 determines an absolute pressure in the fluid g flowing through the bypass channel 17 as the measurement parameter *P* indicative of a change in said fluid flow. Furthermore, the second sensor 12 is arranged and configured to provide a second measurement signal *S* representing said measured parameter *P*.

It is to be understood that in further embodiments, the second sensor 12 may be of a different design using a different sensing principle like an optical, piezoresistive, a capacitive, an electromagnetic, a hall sensor principle, or any other sensing principle that allows the second sensor 12 to have a reduced measurement energy consumption when compared to the first flow sensor arrangement 11.

Moreover, the flow sensor device 10 comprises a control unit 13 which is connected to the first sensor arrangement 11 and to the second sensor 12. The control unit 13 comprises integrated circuitry 15 (or parts thereof). The control unit 13 is arranged and configured to monitor the parameter P by means of the second sensor 12, the latter being triggered by the control unit 13 to measure said parameter *P* and to return said second measurement signal *S* representative of the parameter *P*.

The control unit 13 is further configured to compare said second measurement signal *S* or an estimate based thereon with a predefined threshold value T. The threshold value T may be provided by the device manufacturer or it may be entered to the device 10 by the user through a user interface 156. If the comparison of the second measurement signal S, or of an estimate of a flow measurement signal change estimated on the basis of the second measurement signal *S*, with the threshold value T yields a predefined result, *e.g.* if the threshold value is exceeded, the control unit 13 generates a control signal *C*.

The control unit 13 is further configured to trigger with said control signal *C* an accurate measurement by means of the first sensor arrangement 11.

The first sensor arrangement 11 is arranged and configured to execute, upon receiving the triggering control signal C, the flow measurement, whereupon the flow rate *R* is accurately determined. The flow measurement result may then be outputted, stored, or provided to further applications.

The control unit 13 may be further adapted to compare the measured flow rate *R* with the second measurement signal S, or a derivation thereof, in order to do a consistency check. If the consistency check indicates bad measurement data, the measurement may be repeated.

It is noted that the pressure sensor 12, depending on the actually applied measurement principle, may measure a low static pressure due to a high dynamic pressure, which is indicative of high flow. Accordingly, a drop in absolute pressure may indicate a flow increase.

Accordingly, the energy intensive first sensor arrangement 11 is used if the monitoring second sensor 12 indicates a change in the total flow rate *R* or in the flow measurement signal representing the flow rate *R* and being measured by the first flow sensor arrangement.

**Figures 2-4** show respectively a second, third, fourth embodiment of the flow sensor device 10 according to invention. In Figs. 2-4, features with the same functions as features in the first embodiment in Fig. 1 are designated with the same reference numerals.

In the further embodiments according to Figs. 2-4, the second sensor 12 is not arranged in the bypass channel 17 but in the main channel 16. In the second embodiment according to Fig. 2, the second sensor 12 is arranged in the region of the flow restrictor. In the third embodiment according to Fig. 3, the second sensor 12 is arranged upstream of the flow restrictor 14. In the fourth embodiment according to Fig. 4, the second sensor 12 is arranged downstream of the flow restrictor 14.

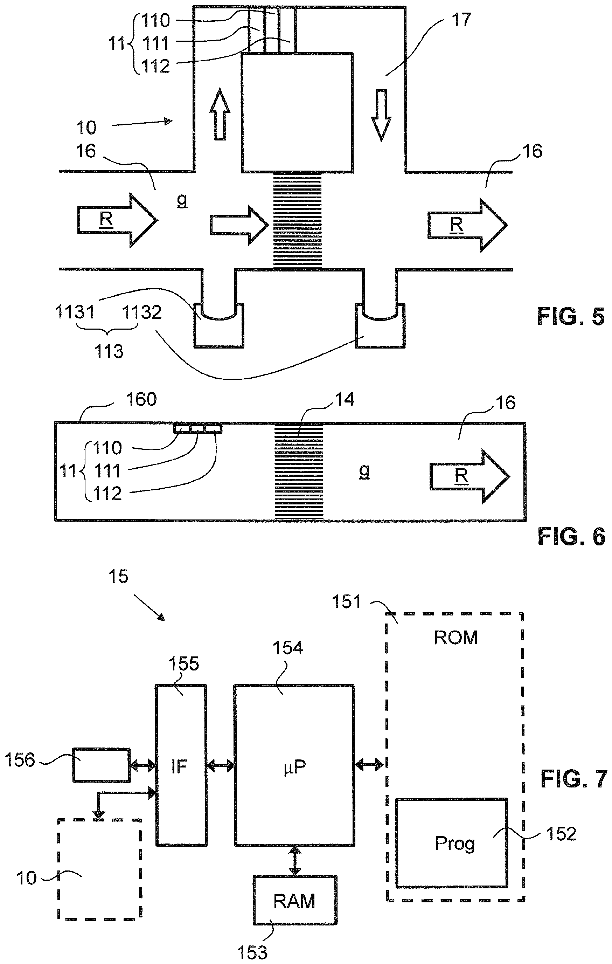

**Figure 5** shows a fifth embodiment of the flow sensor device 10 according to invention. In the fifth embodiment, the first sensor arrangement 11 is a differential pressure sensor 113 with two absolute pressure sensors 1131, 1132. The absolute pressure sensors 1131, 1132 measure the absolute pressure at their location from which a pressure difference may be determined. Exemplarily, Fig. 5 shows that the absolute pressure sensors 1131, 1132 are arranged upstream and downstream of the flow restrictor 14, respectively. Other arrangements are conceivable.

The pressure difference is then used as a measure for determining the flow rate *R* through the main tube 16.

The second sensor 12 may then be one of the pressure sensors 1131, 1132.

In yet another, a sixth embodiment, an additional thermal flow sensor 11 may be arranged in the bypass channel 17 in addition to the differential pressure sensor 113 as shown in Fig. 5. Thereby, the energy consumption of the device 10 may be further decreased.

On the one hand, if the flow rate *R* is in a low-flow range, the flow rate R may be measured with the thermal flow sensor 11 as explained above, whilst the second sensor 12 is the first and/or the second absolute pressure sensor 1131, 1132.

On the other hand, if flow rate *R* is in a high-flow range, the differential pressure sensor 113 is used. It is known that in higher flow ranges differential pressure sensors may provide sufficient measurement accuracy.

The term "*high-flow range*" is to be understood as the range where the differential pressure sensor 113 measures with sufficient precision; the term "*low-flow range*" is the flow range with flows that are smaller than the smallest flow comprised in the high-flow range.

Therefore, in this embodiment, the sensor device 10 measures the total flow rate *R* in low-flow range with the thermal flow sensor 11 while in the high-flow range the device 10 measures with the differential pressure sensor 113, which further reduces energy consumption as the differential pressure sensor 113 requires less energy than the thermal flow sensor 11. At the same time, the second sensor 12 is a absolute pressure sensor 12 that may be comprised by the differential pressure sensor or not.

It is to be understood here that in this low- and high-flow range measurements are performed according to the inventive idea, *i.e*. when the second sensor 12 signals a flow change or a change in the flow signal representing the flow rate *R* and being measured by the first flow sensor arrangement, in particular when the control signal *C* triggers the respective measurement as explained above.

The sensor arrangement comprising the thermal and the differential pressure sensor arrangements 11, 113 also allows for an improved consistency check as there are two independent and complete flow sensor arrangements available.

In another embodiment, the first flow sensor arrangement 11 and the second flow sensor 12 may be both arranged in the main tube 16 as illustrated in **Figure 6****.** Accordingly, a bypass channel 17 may be dispensed with. The first flow sensor arrangement 11 may be a thermal flow sensor arrangement arranged, *e.g*., at a tube wall 160 (as shown in Fig. 6) or it may be a differential pressure sensor as shown in Fig. 5 (without the bypass channel 17). Such an embodiment is particularly advantageous for medical applications. The first flow sensor arrangement 11 may be upstream, downstream or the flow restrictor 14 or at the positon of the flow restrictor 14. The second sensor may be located upstream or downstream of the first flow sensor arrangement 11 as in the other embodiments.

**Figure 7** shows a simplified block diagram of a computer program product for the electronic device 10 as described herein. The integrated circuitry 15 comprises a processor unit (CPU, µP) 154, a non-volatile (*e.g*. a flash ROM) memory 151, and a volatile (RAM) memory 153. The processor 154 communicates with the memory modules 151, 153. The non-volatile memory 151 stores, *inter alia,* received or generated signals, as well as a machine-executable program code 152 for execution in the processor 154. Via a data interface 155, the processor 154 communicates with various peripherals, including, for example and depending on the application, the pressure sensor 12 and/or a user interface 156. The user interface 156 may include, *e.g.,* at least one of a network interface for interfacing with an external input/output device, a dedicated input device such as a keyboard and/or mouse for inputting, e.g., a threshold value T or a measurement scheme or the like, and a dedicated output device, such as, *e.g.,* an LCD screen for displaying information.

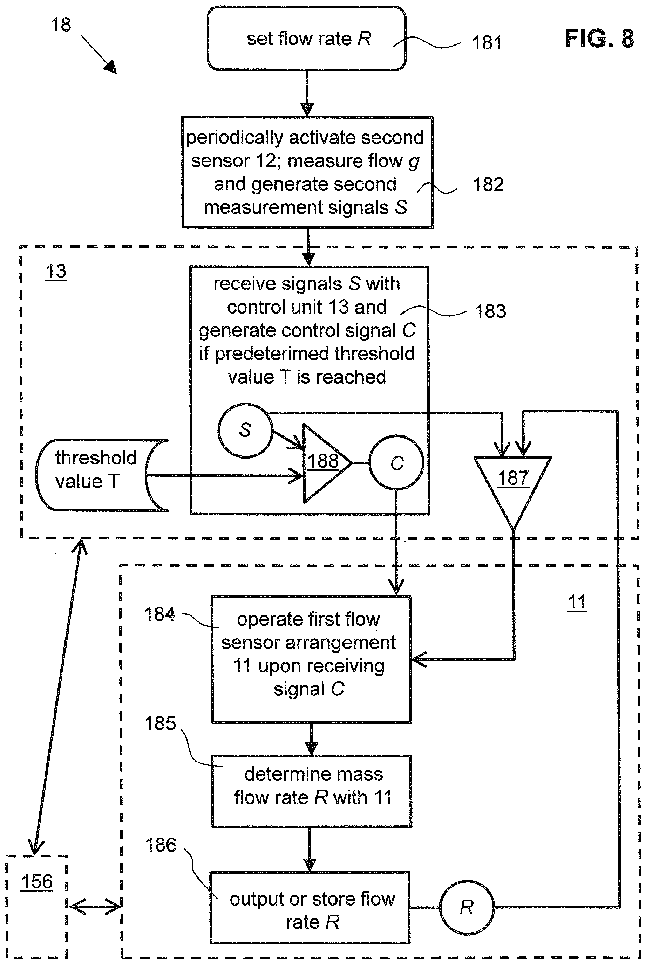

**Figure 8** shows a block diagram of a preferred embodiment of the method according to invention.

In a first method step 181 a flow is set with an unknown total flow rate *R*.

In method step 182 the device 10 monitors with second sensor 12 at least part of the total flow rate *R*, said part being indicative of the total flow rate *R*. The measurements with second sensor 12 yield second measurement signals *S* via said parameter *P*.

In next step 183 the signal *S* is received by the control unit 13. The second measurement signal *S*, or a derivative thereof, is compared by comparator 188 to the threshold value T stored in or inputted to the device 10. If the comparison signals a flow change qualifying for a trigger signal *C* generation, the control unit 13 generates said control signal *C*, which triggers an accurate flow measurement with the first flow sensor arrangement 11.

In step 184, sensor arrangement 11 (or 113, depending on the embodiment) measures the total flow rate *R* which is determined in step 185.

In step 186, the measured value for the total flow rate R may then be outputted in user interface 156 and/or stored, *e.g*. in the control unit 13, in particular in the non-volatile memory 151 and/or used for an optional consistency check by means of a comparator 187 comparing the second measurement signal *S* and the measured rate *R* (which should have a predetermined relation), or, in case two separate flow sensor arrangements are available (as in the embodiment shown in Fig. 5), comparing the flow measurement results collected by means of the two sensor arrangements.

**LIST OF REFERENCE SIGNS**

| | | | |
|---|---|---|---|
| 10 | flow sensor device | 154 | processor unit |
| | | 155 | data interface |
| 11 | first flow sensor arrangement | 156 | user interface |
| 110 | heater element | | |
| 111 | first temperature sensor | 16 | main flow tube |
| 112 | second temperature sensor | 160 | wall section of 16 |
| 113 | differential pressure sensor | 17 | bypass flow tube |
| 1131 | first absolute pressure sensor | | |
| 1132 | second absolute pressure sensor | 18 | method |
| | | 181-186 | method step |
| | | 187,188 | comparator |
| 12 | second sensor | | |
| 13 | control unit | *C* | control signal |
| 14 | flow restrictor | g | fluid, *e.g.* gas or liquid |
| | | *P* | parameter indicative of a |
| 15 | integrated circuitry | | change of a signal of 11 |
| 151 | non-volatile memory | *R* | total flow rate |
| 152 | machine-executable program code | *S* | second measurement signal |
| | | T | threshold value |
| 153 | a volatile memory | | |

## Claims

1. Method for measuring a fluid flow of a fluid (g), comprising the steps of:
i) guiding the fluid (g) through a flow sensor device (10), the flow sensor device (10) comprising a first flow sensor arrangement (11) for intermittently measuring a flow rate (*R*) of said fluid (g);
ii) monitoring said fluid flow by means of a second sensor (12) comprised by the flow sensor device (10), the second sensor (12) being designed to use less energy for its measurement than the first flow sensor arrangement (11) uses for its measurement, and being configured and arranged to measure a parameter (*P*), the parameter (*P*) being indicative of said flow rate (*R*) or of a change in said flow rate (*R*) or in the flow measurement signal representing the flow rate (*R)* and being measured by the first flow sensor arrangement (11), and to generate at least one second measurement signal (*S*) thereof; **characterized in that**
iii) upon receiving said at least one second measurement signal (*S*) by means of a control unit (13) comprised by the flow sensor device (10): comparing by means of said control unit (13) said at least one second measurement signal (*S*) with a predefined threshold value (T) and generating a control signal (*C*) by means of said control unit (13) if said comparison gives a predefined result;
iv) triggering with said control signal (*C*) a measurement of the flow rate (*R*) by means of said first flow sensor arrangement (11).

2. The method according to claim 1, wherein, after said triggering, a flow measurement signal representative of said flow rate (*R*) is generated by said first flow sensor arrangement (11) and outputted.

3. The method according to claim 1 or 2, wherein a thermal flow sensor (110-112) or a differential pressure sensor arrangement (1131,1132) is used as the first flow sensor arrangement (11).

4. The method according to any one of claims 1 to 3, wherein an absolute pressure sensor is used as the second sensor (12).

5. The method according to claim 3 and 4, wherein the absolute pressure sensor (12) is part of the differential pressure sensor (1131,1132).

6. The method according to any one of claims 2 to 5, wherein said control unit (13) receives said flow measurement signal measured by said first flow sensor arrangement (11) and is arranged and configured to perform a signal redundancy check of said flow measurement signal with said second measurement signal (*S*) and/or to correct an offset drift of the second sensor (12).

7. Flow sensor device (10) comprising:
a first flow sensor arrangement (11) for intermittently measuring a flow rate (*R*) of a fluid (g) through the flow sensor device (10);
a second sensor (12), the second sensor (12) being configured and arranged to measure a parameter (*P*) indicative of said flow rate (*R*) or of a change in said flow rate (*R*) or in the flow measurement signal representing the flow rate (R) and being measured by the first flow sensor arrangement and being configured to generate at least one second measurement signal (*S*) thereof;
a control unit (13) configured and arranged to receive said at least one second measurement signal (*S*) from said second flow sensor (12), to compare by means of said control unit (13) said at least one second measurement signal (*S*) with a predefined threshold value (T), and to generate a control signal (*C*) by means of said control unit (13) if said comparison gives a predefined result, wherein the control unit (13) is further configured and arranged to trigger with said control signal (*C*) a measurement of the flow rate (*R*) with said first flow sensor arrangement (11);
wherein the second sensor (12) is designed such that it uses less energy for the measurement than the first flow sensor arrangement (11) uses for the measurement.

8. Flow sensor device (10) according to claim 7, wherein the first flow sensor arrangement (11) is or includes a thermal flow sensor, comprising at least one heater element (110) and at least one, preferably two temperature sensors (111;112).

9. Flow sensor device (10) according to claim 7 or 8, wherein the first flow sensor arrangement (11) is or includes a differential pressure flow sensor (113).

10. Flow sensor device (10) according to any one of claims 7 to 9, wherein the second sensor (12) is or includes an ultrasonic flow sensor, an optical flow sensor, an absolute pressure sensor, or an electromagnetic flow sensor.

11. Flow sensor device (10) according to any one of claims 7 to 10, wherein the flow sensor device (10) is a natural gas meter and/or a battery-operated device.

12. Flow sensor device (10) according to claim 9 or claims 9 and 11, wherein said differential pressure sensor (113) comprises two or more absolute pressure sensors (1131;1132), and wherein said second sensor (12) is one of said two or more absolute pressure sensors (1131;1132).

13. Flow sensor device (10) according to any one of claims 7 to 12, wherein said control unit (13) is configured and arranged to receive a flow measurement signal measured by said first flow sensor arrangement (11) and to perform a signal redundancy check of said flow measurement signal with said second measurement signal (*S*) and/or to perform a correction of an offset drift of the second sensor (12).

14. Computer program product comprising computer program code, wherein the program code, when carried out in an integrated circuitry (16), causes the integrated circuitry (16):
- to monitor a flow rate (*R*) of a fluid (g) through the flow sensor device (10) according to any one of claims 7 to 13;
- to compare said at least one second measurement signal (*S*) with a predefined threshold value (T), wherein said at least one second measurement signal (S) is indicative of a change in said flow rate (R) or in the flow measurement signal representing the flow rate (R);
- to generate said control signal (*C*) by means of the control unit (13) if said at least one second measurement signal (S) exceeds the predefined threshold value (T); and
- to trigger with said control signal (*C*) a measurement of the flow rate (*R*) with said first flow sensor arrangement (11).

15. Use of a method according to any one of claims 1 to 6, or of a flow sensor device (10) according to any one of claims 7 to 13, or of a computer program product according to claim 14, for measuring a flow rate (*R*) of a fluid (g).

## Patentansprüche

1. Verfahren zum Messen eines Fluidstroms eines Fluids (g), umfassend die Schritte:
i) Führen des Fluids (g) durch eine Durchflusssensorvorrichtung (10), wobei die Durchflusssensorvorrichtung (10) eine erste Durchflusssensoranordnung (11) zum intermittierenden Messen einer Durchflussrate (R) des Fluids (g) umfasst;
ii) Überwachen des Fluidstroms mittels eines zweiten Sensors (12), der von der Durchflusssensorvorrichtung (10) umfasst ist, wobei der zweite Sensor (12) so ausgelegt ist, dass er weniger Energie für seine Messung verbraucht, als die erste Durchflusssensoranordnung (11) für ihre Messung verbraucht, und wobei der zweite Sensor (12) dazu ausgebildet und angeordnet ist, einen Parameter (P) zu messen, wobei der Parameter (P) die Durchflussrate (R) oder eine Änderung der Durchflussrate (R) oder des Durchflussmesssignals, das die Durchflussrate (R) darstellt, anzeigt und von der ersten Durchflusssensoranordnung (11) gemessen wird, und mindestens ein zweites Messsignal (S) davon zu erzeugen; **gekennzeichnet durch**
iii) beim Empfangen des mindestens einen zweiten Messsignals (S) mittels einer Steuereinheit (13), die von der Durchflusssensorvorrichtung (10) umfasst ist: Vergleichen des mindestens einen zweiten Messsignals (S) mit einem vordefinierten Schwellenwert (T) mittels der Steuereinheit (13) und Erzeugen eines Steuersignals (C) mittels der Steuereinheit (13), wenn der Vergleich ein vordefiniertes Ergebnis liefert;
iv) Auslösen einer Messung der Durchflussrate (R) mit dem Steuersignal (C) mittels der ersten Durchflusssensoranordnung (11).

2. Verfahren nach Anspruch 1, wobei nach dem Auslösen ein für die Durchflussrate (R) repräsentatives Durchflussmesssignal durch die erste Durchflusssensoranordnung (11) erzeugt und ausgegeben wird.

3. Verfahren nach Anspruch 1 oder 2, wobei ein thermischer Durchflusssensor (110-112) oder eine Differenzdrucksensoranordnung (1131, 1132) als erste Durchflusssensoranordnung (11) verwendet wird.

4. Verfahren nach einem der Ansprüche 1 bis 3, wobei ein Absolutdrucksensor als zweiter Sensor (12) verwendet wird.

5. Verfahren nach Anspruch 3 und 4, wobei der Absolutdrucksensor (12) Teil des Differenzdrucksensors (1131, 1132) ist.

6. Verfahren nach einem der Ansprüche 2 bis 5, wobei die Steuereinheit (13) das von der ersten Durchflusssensoranordnung (11) gemessene Durchflussmesssignal empfängt und dazu angeordnet und ausgebildet ist, eine Signalredundanzprüfung des Durchflussmesssignals mit dem zweiten Messsignal (S) durchzuführen und/oder eine Offsetdrift des zweiten Sensors (12) zu korrigieren.

7. Durchflusssensorvorrichtung (10), umfassend:
eine erste Durchflusssensoranordnung (11) zum intermittierenden Messen einer Durchflussrate (R) eines Fluids (g) durch die Durchflusssensorvorrichtung (10);
einen zweiten Sensor (12), wobei der zweite Sensor (12) dazu ausgebildet und angeordnet ist, einen Parameter (P) zu messen, der die Durchflussrate (R) oder eine Änderung der Durchflussrate (R) oder des Durchflussmesssignals, das die Durchflussrate (R) darstellt, anzeigt und von der ersten Durchflusssensoranordnung gemessen wird, und dazu ausgebildet ist, mindestens ein zweites Messsignal (S) davon zu erzeugen;
eine Steuereinheit (13), die dazu ausgebildet und angeordnet ist, das mindestens eine zweite Messsignal (S) von dem zweiten Durchflusssensor (12) zu empfangen, um mittels der Steuereinheit (13) das mindestens eine zweite Messsignal (S) mit einem vorbestimmten Schwellenwert (T) zu vergleichen und um mittels der Steuereinheit (13) ein Steuersignal (C) zu erzeugen, wenn der Vergleich ein vordefiniertes Ergebnis liefert, wobei die Steuereinheit (13) ferner dazu ausgebildet und angeordnet ist, mit dem Steuersignal (C) eine Messung der Durchflussrate (R) mit der ersten Durchflusssensoranordnung (11) auszulösen;
wobei der zweite Sensor (12) so ausgelegt ist, dass er weniger Energie für die Messung verbraucht, als die erste Durchflusssensoranordnung (11) für die Messung verbraucht.

8. Durchflusssensorvorrichtung (10) nach Anspruch 7, wobei die erste Durchflusssensoranordnung (11) ein thermischer Durchflusssensor ist oder einen solchen umfasst, wobei dieser mindestens ein Heizelement (110) und mindestens einen, vorzugsweise zwei Temperatursensoren (111; 112) umfasst.

9. Durchflusssensorvorrichtung (10) nach Anspruch 7 oder 8, wobei die erste Durchflusssensoranordnung (11) ein Differenzdrucksensor (113) ist oder einen solchen umfasst.

10. Durchflusssensorvorrichtung (10) nach einem der Ansprüche 7 bis 9, wobei der zweite Sensor (12) ein Ultraschalldurchflusssensor, ein optischer Durchflusssensor, ein Absolutdrucksensor oder ein elektromagnetischer Durchflusssensor ist oder einen solchen umfasst.

11. Durchflusssensorvorrichtung (10) nach einem der Ansprüche 7 bis 10, wobei die Durchflusssensorvorrichtung (10) ein Erdgaszähler und/oder eine batteriebetriebene Vorrichtung ist.

12. Durchflusssensorvorrichtung (10) nach Anspruch 9 oder Anspruch 9 und 11, wobei der Differenzdrucksensor (113) zwei oder mehr Absolutdrucksensoren (1131; 1132) umfasst, und wobei der zweite Sensor (12) einer der zwei oder mehreren Absolutdrucksensoren (1131; 1132) ist.

13. Durchflusssensorvorrichtung (10) nach einem der Ansprüche 7 bis 12, wobei die Steuereinheit (13) dazu ausgebildet und angeordnet ist, ein von der ersten Durchflusssensoranordnung (11) gemessenes Durchflussmesssignal zu empfangen und eine Signalredundanzprüfung des Durchflussmesssignals mit dem zweiten Messsignal (S) durchzuführen und/oder eine Korrektur einer Offsetdrift des zweiten Sensors (12) durchzuführen.

14. Computerprogrammprodukt, umfassend Computerprogrammcode, wobei der Programmcode, wenn er in einer integrierten Schaltung (16) ausgeführt wird, die integrierte Schaltung (16) dazu veranlasst:
- eine Durchflussrate (R) eines Fluids (g) durch die Durchflusssensorvorrichtung (10) nach einem der Ansprüche 7 bis 13 zu überwachen;
- das mindestens eine zweite Messsignal (S) mit einem vordefinierten Schwellenwert (T) zu vergleichen, wobei das mindestens eine zweite Messsignal (S) eine Änderung der Durchflussrate (R) oder des Durchflussmesssignals, das die Durchflussrate (R) darstellt, anzeigt;
- das Steuersignal (C) mittels der Steuereinheit (13) zu erzeugen, wenn das mindestens eine zweite Messsignal (S) den vorgegebenen Schwellenwert (T) überschreitet; und
- mit dem Steuersignal (C) eine Messung der Durchflussrate (R) mit der ersten Durchflusssensoranordnung (11) auszulösen.

15. Verwendung eines Verfahrens nach einem der Ansprüche 1 bis 6 oder einer Durchflusssensorvorrichtung (10) nach einem der Ansprüche 7 bis 13 oder eines Computerprogrammprodukts nach Anspruch 14 zum Messen einer Durchflussrate (R) eines Fluids (g).

## Revendications

1. Un procédé de mesure d'un flux de fluide d'un fluide (g), comprenant les étapes consistant à:
i) guider le fluide (g) à travers un dispositif capteur de flux (10), le dispositif capteur de flux (10) comprenant un premier agencement de capteur de flux (11) pour mesurer par intermittence un débit (*R*) dudit fluide (g);
ii) surveiller ledit flux de fluide au moyen d'un second capteur (12) constitué par le dispositif capteur de flux (10), le second capteur (12) étant conçu pour utiliser moins d'énergie pour sa mesure que le premier agencement de capteur de flux (11) utilise pour sa mesure, et étant configuré et agencé pour mesurer un paramètre (*P*), le paramètre (*P*) étant indicatif dudit débit (*R*) ou d'un changement dudit débit (*R*) ou du signal de mesure de débit représentant le débit (*R*) et mesuré par le premier agencement de capteur de flux (11), et pour générer au moins un second signal de mesure (*S*) de celui-ci; **caracterisé en ce que**
iii) lors de la réception dudit au moins un second signal de mesure (*S*) au moyen d'une unité de commande (13) constituée par le dispositif capteur de flux (10): comparer au moyen de ladite unité de commande (13) ledit au moins un second signal de mesure (*S*) avec une valeur de seuil prédéfinie (T) et générer un signal de commande (*C*) au moyen de ladite unité de commande (13) si ladite comparaison donne un résultat prédéfini;
iv) déclencher avec ledit signal de commande (*C*) une mesure du débit (*R*) au moyen dudit premier agencement de capteur de flux (11).

2. Le procédé selon la revendication 1, dans lequel, après ledit déclenchement, un signal de mesure de débit représentatif dudit débit (*R*) est généré par ledit premier agencement de capteur de flux (11) et délivré en sortie.

3. Le procédé selon la revendication 1 ou 2, dans lequel un capteur de flux thermique (110-112) ou un agencement de capteur de pression différentielle (1131, 1132) est utilisé en tant que premier agencement de capteur de flux (11).

4. Le procédé selon l'une quelconque des revendications 1 à 3, dans lequel un capteur de pression absolue est utilisé en tant que second capteur (12).

5. Le procédé selon la revendication 3 et 4, dans lequel le capteur de pression absolue (12) fait partie du capteur de pression différentielle (1131, 1132).

6. Le procédé selon l'une quelconque des revendications 2 à 5, dans lequel ladite unité de commande (13) reçoit ledit signal de mesure de flux mesuré par ledit premier agencement de capteur de flux (11) et est agencé et configuré pour effectuer un contrôle de redondance de signal dudit signal de mesure de flux avec ledit second signal de mesure (*S*) et / ou pour corriger une dérive de décalage du second capteur (12).

7. Un dispositif de capteur de flux (10) comprenant:
un premier agencement de capteur de flux (11) pour mesurer par intermittence un débit (*R*) d'un fluide (g) à travers le dispositif de capteur de flux (10);
un second capteur (12), le second capteur (12) étant configuré et agencé pour mesurer un paramètre (*P*) indicatif dudit débit (*R*) ou d'un changement dudit débit (*R*) ou du signal de mesure de flux représentant le débit (*R*) et mesuré par le premier agencement de capteur de flux et étant configuré pour générer au moins un second signal de mesure (S) de celui-ci;
une unité de commande (13) configurée et agencée pour recevoir ledit au moins un second signal de mesure (*S*) provenant dudit second capteur de flux (12), afin de comparer, au moyen de ladite unité de commande (13), ledit au moins un second signal de mesure (*S*) avec une valeur de seuil prédéfinie (T), et pour générer un signal de commande (*C*) au moyen de ladite unité de commande (13) si ladite comparaison donne un résultat prédéfini, dans lequel l'unité de commande (13) est en outre configurée et agencée pour déclencher avec ledit signal de commande (C) une mesure du débit (*R*) avec ledit premier agencement de capteur de flux (11);
dans lequel le second capteur (12) est conçu de manière à utiliser moins d'énergie pour la mesure que le premier agencement de capteur de flux (11) utilise pour la mesure.

8. Dispositif capteur de flux (10) selon la revendication 7, dans lequel le premier agencement de capteur de flux (11) est ou comprend un capteur de flux thermique, comprenant au moins un élément chauffant (110) et au moins un, de préférence deux capteurs de température (111; 112).

9. Dispositif capteur de flux (10) selon la revendication 7 ou 8, dans lequel le premier agencement de capteur de flux (11) est ou comprend un capteur de flux à pression différentielle (113).

10. Dispositif capteur de flux (10) selon l'une quelconque des revendications 7 à 9, dans lequel le second capteur (12) est ou comprend un capteur de flux à ultrasons, un capteur de flux optique, un capteur de pression absolue ou un capteur de flux électromagnétique.

11. Dispositif capteur de flux (10) selon l'une quelconque des revendications 7 à 10, dans lequel le dispositif capteur de flux (10) est un compteur de gaz naturel et / ou un dispositif alimenté par batterie.

12. Dispositif capteur de flux (10) selon la revendication 9 ou les revendications 9 et 11, dans lequel ledit capteur de pression différentielle (113) comprend deux ou plusieurs capteurs de pression absolue (1131; 1132), et dans lequel ledit second capteur (12) est l'un des dits deux ou plusieurs capteurs de pression absolue (1131; 1132).

13. Dispositif capteur de flux (10) selon l'une quelconque des revendications 7 à 12, dans lequel ladite unité de commande (13) est configurée et agencée pour recevoir un signal de mesure de flux mesuré par ledit premier agencement de capteur de flux (11) et pour effectuer un contrôle de redondance dudit signal de mesure de flux avec ledit second signal de mesure (*S*) et / ou pour effectuer une correction d'une dérive de décalage du second capteur (12).

14. Un produit de logiciel informatique comprenant un code de programme informatique, dans lequel le code de programme, lorsqu'il est mis en œuvre dans un circuit intégré (16), entraîne le circuit intégré (16):
- à surveiller le débit (*R*) d'un fluide (g) à travers un dispositif capteur de flux (10) selon l'une quelconque des revendications 7 à 13;
- à comparer ledit au moins un second signal de mesure (*S*) à une valeur de seuil prédéfinie (T), dans lequel ledit au moins second signal de mesure (*S*) est indicatif d'un changement dans le dit débit (*R*) ou dans le signal de mesure de flux représentant le débit (R);
- à générer ledit signal de commande (*C*) au moyen de l'unité de commande (13) si ledit au moins second signal de mesure (*S*) dépasse une valeur de seuil prédéfinie (T); et
- déclencher avec ledit signal de commande (*C*) une mesure du débit (*R*) avec ledit premier agencement de capteur de flux (11).

15. Utilisation d'un procédé selon l'une quelconque des revendications 1 à 6, ou d'un dispositif capteur de flux (10) selon l'une quelconque des revendications 7 à 13, ou d'un produit de logiciel d'ordinateur selon la revendication 14, pour mesurer un débit (*R*) d'un fluide (g).
